# EUROPEAN PATENT APPLICATION

(11) **EP 1 777 790 A1**
(43) Date of publication of application: **25.04.2007**
(21) Application number: 06122874.8
(22) Date of filing: 24.10.2006
(51) Int. Cl.: H02G 3/00

(54) **A system for safe distribution of electrical current or electrical signals**

(30) Priority: 24.10.2005 SE 0502364
(71) Applicant: Wexio AB, 42942 Särö (SE)
(72) Inventor: Bergman, Mikael, 42942 Särö (SE)
(74) Representative: Skagersten, Thomas

(57) **Abstract**

A system for safe electrical current and signal distribution. The system comprises at least one output terminal (2) for connection to end user devices, the output terminals (2) comprise terminal connectors (5). The system further comprises a plurality of terminal connection units (1), each of which comprising at least one output connector (3) and at least one distribution connector (4). Also the system comprises electrical conductors (6) for interconnecting said plurality of terminal connection units (1) via said at least one distribution connector (4). The terminal connectors (5), output connectors (3), distribution connectors (4) and conductor connectors (6) are arranged to be connected and disconnected with each other, respectively, in a quick-coupling arrangement.

## Description

### Technical Field of the Invention

The present invention relates to a system for safe electrical current and signal distribution comprising at least one output terminal for connecting end user devices, a plurality of terminal connection units and electrical conductors for interconnecting said plurality of terminal connection units.

### Background of the Invention

A conventional signal and power distribution system is usually installed by authorized personnel, sometimes as required by national law. Such a system may comprise conductors for distributing electrical signals and/or power in the system and terminals, such as wall sockets, for connecting end user devices, such as floor and ceiling lamps, light switches, radios, television sets, hairdryers, music audio systems and computers. Before the installation of such a system, a plan is made for where to position the terminals. The plan is based on assumptions about where the end user desires to have output terminals. Usually, one desires to locate the output terminals in order to make it as convenient as possible for the end user, i.e. the end user should always have an output terminal within a reasonable distance from the end user device.

After the system has been installed, these output terminals can not be moved unless, as above, authorized personnel is employed to make the desired changes. In some countries, the end user is not allowed to make these changes him/her-self. Furthermore, if there is a need for a terminal at a distance further away from the end user device than the length of the available cord of the device, the end user is forced to use an extension cord. These cords may be considered bulky, obstructive and ugly. Moreover, when there is a shortage of terminals, the end user is forced to use junction boxes, which again are bulky, obstructive and sometimes considered ugly. If there are unused terminals in the system, these will be left empty, and hence may present an unattractive element in the interior, in which the system is installed.

Optionally, instead of using extension cords and junction boxes, the end user may consult an authorized electrician in order to install terminals at new locations and additional terminals at old locations. Normally, the conductors for connection to the terminals are arranged in the walls of the building, i.e. a tubing system for the conductors is provided within the walls. However, in office environments, it has become increasingly more common to install a modular system, since functional requirements often are more important than esthetical requirements.

Thus, a problem within the art is that the number of output terminals are limited and the location of the output terminals are essentially fixed. One attempt to overcome some of these problems is disclosed in WO 01/56127 A1, where terminal connection units with accompanying electrical wires are inserted in mouldings, such as skirting boards, in an aesthetic manner. The units in the mouldings is as an example spaced 1,5 meters apart. Since the terminal connection units are densely placed, the system also includes blind plugs to be mounted at those units, which are not used at the moment. Although this solution offers possibilities to reposition the output terminals, the terminals are still limited to fixed positions, predetermined by the terminal connection units.

A further example is presented in WO 93/24975 A1. As above, this electrical installation system includes terminal connections units disposed at predetermined intervals throughout a room with movable output terminals. Both these examples describe a somewhat flexible system based on the idea of installing extra redundant terminal connection units, and enables adding or repositioning of output terminals. However, apart from some flexibility, this remains a fixed system following installation, that is the terminal connection units can neither be added nor be repositioned.

In the document US 4,750,899, a further alternative of an electrical distribution system is described, with slidable output terminals arranged along an elongated electrical source. Basically, the system is one big connectable terminal connection unit along which the output terminals may be freely positioned. Even though this may after installation be a flexible system, it is by no means a secure or contact safe system for the end user.

To summarize, the issues related to the usage of extension cords or junction boxes have to some extent been solved in the art by semi-flexible systems with output terminals which may be moved or added to essentially fixed extra terminal connection units. For the systems in which a high safety could be provided, any change to an already installed system must be done by an authorized person. Thus, these systems are expensive to install and modify, and are often prohibited to be altered by the end user.

### Summary of the Invention

It is an object of the present invention to provide a flexible and easily installable and modifiable system for safe electrical current and signal distribution.

This object is met by a system as set forth in the appended independent claims. Specific embodiments are defined in the dependent claims.

In an aspect of the invention, there is provided a system for safe distribution of electrical current or electrical signals. The system comprises at least one output terminal for connection to end user devices, said at least one output terminal comprising a terminal connector, a plurality of terminal connection units, each of which comprises at least one output connector, for connection with a terminal connector, and at least one distribution connector, and electrical conductors for interconnecting said plurality of terminal connection units, said electrical conductors comprising conductor connectors for connection to said distribution connectors. Said terminal, output, distribution and conductor connectors are arranged to be connected and disconnected with each other, respectively, in a quick-coupling arrangement.

In the context of the present invention, the term output terminal refers to, e.g., a wall socket for distributing electrical current. The output terminal may further or alternatively comprise connectors for telephones, computer networks, audio systems, etc., or a combination thereof, e.g. an output terminal may comprise both Ethernet connectors, wall sockets, a telephone point and connectors for transmitting audio signals. Also, the term output terminal is not limited to a socket positioned on a wall, even though this is the most common alternative. On the contrary, sockets for positioning on ceilings are also intended to be included in the scope of invention.

An idea of the invention is to provide a system for safely, e.g. childproof, and securely distributing current and signals in an indoor environment, such as an office, a home or a domestic environment, or even in industrial premises, which may easily be modified, in a safe way, by an end user without exposing the end user to hazard. Such a modifiable system comprises terminal connection units, output terminals and electrical conductors, with associated connectors or connector elements, which electrical conductors are arranged for distributing electrical signals and/or current between the terminal connection units in the system.

The system can be seen as a sequence of electrical conductors and terminal connection units, wherein each terminal connection unit is adapted to be easily connected to and disconnected from an output terminal in a quick-coupling arrangement. In the system, the number of output terminals and the locations of the output terminals can be altered, due to the fact that the output terminals are connectable and disconnectable to the terminal connection units by means of coupling elements (terminal connectors). In order to allow connection and disconnection between the output terminals and the terminal connection units, each terminal connection unit is provided with corresponding coupling elements (output connectors).

In every junction between the various parts of the system, there are two interacting connectors for engagement and connection with each other in a quick-coupling arrangement. Thus, the connections between the terminal connection units, the output terminals and the electrical conductors are all obtained through quick-coupled connectors. In addition to the advantage of a quick and easy coupling of the system, a more essential feature of the quick-coupling arrangement is that it prevents hazardous handling, which could result in incorrect and dangerous couplings. If such errors would occur in a system for power distribution, it could cause fire and personal injuries. Therefore, the safety of the system is at such a level that the end user him/herself may modify the system in any possible way without risk of personal injury. Thereby, the need for authorized personnel is reduced or eliminated.

A further advantage of having all junctions in the form of quick-coupling connectors, is that installation and even modification of the system can be performed with the current still switched on. Hence, there is no need for the end user to cut the power before doing any modifications, which is particularly useful when performing modifications in insufficient daylight since already installed lights may be kept on.

Preferably, the connectors in the system are male and female type connectors, where all male connectors are connectable to all female connectors. Thus, where output connectors of the terminal connection unit are concerned, these could be used for connecting cable conductors as well as terminal outputs. Thus, the very same three-way terminal connector unit used for connecting output terminals could act as a re-directing element, i.e. to change direction of the conductor path in the system, for instance at junctions between horizontal and vertical conductors. Of course, a terminal connection unit comprising two or more female connectors, i.e. voltage carrying outgoing connectors, can be used as a branching junction, branching the feed of current in two or more directions. Then, a female type output connector would act as a female type distribution connector.

Furthermore, in a system with male and female type connectors, the female connectors are used for delivering or feeding current and power, while the male connectors are used for receiving current. In other words, as seen in the feed direction of current in the system, for safety reasons, the female connectors are provided on the up-stream side, while the male connectors are provided on the down-stream side. Thus, an element in the system only comprises one male connector, but may comprise several female connectors, depending on the particular element. In this manner, there will never be any risk of a disconnected male connector carrying voltage.

The above advantages are in distinct contrast to a traditional installation of similar systems where stripped-end cables are inserted and attached via snap-in or screw-in mountings in terminal connection units or directly in output terminals. Even though such cables may have been pre-assembled into connectors and terminal connection units, the modification of such a system would require disassembly of the cable from connector units for lengthening and shortening of cables, which requires peeling and direct contact by the installing person with the conducting portion of the cables. Alternatively, the cables could simply be replaced, which would remove the need for tampering with the installed conducting elements. However, this would still require power shutoff for safe installation of new cables, connection units and output terminals.

Thus, the couplings between the cable conductor connectors and the distribution connectors of the terminal connection unit are arranged to be quick-coupled. In the same way, the coupling between output connector of the terminal connection unit and the terminal connector is also arranged to be quick-coupled.

In a further embodiment of the system according to the present invention, the quick-coupling arrangement between the connectors of the terminal connection units, conductors and output terminals, is provided by means of matable connectors, i.e. the connectors are either male or female type connectors, respectively. Advantageously, the male and female type connectors facilitates the connection of electrical conductors onto the terminal connection units, and ensures that the connectors are installed correctly. In this context, it should be noted that the conducting portions of not only the female connectors, but also the male connectors are retracted and surrounded with non-conducting portions of the connectors. In other words, the engaging conducting portions of the cable conductors, terminal connection units and output terminals are not accidentally accessible, e.g. by an operator.

Thus, in accordance with the present invention, a highly flexible system is provided, during installation as well as during modification, while a high degree of safety for operators, as well as for end-users, is still maintained.

The system may be arranged along the skirting of a room. Furthermore, the system may be located from floor to ceiling in a corner of a room, as well as along the cornice at the ceiling of a room. In the following description, floors, ceilings, walls and corner of a room are all referred to as mounting surfaces.

It is preferred that cable conductors, for positioning between and interconnection of terminal connection units and for connection of connection units with an electric cabinet, has a longer extension than what is required for covering the actual distance from one terminal connection unit to another. Thereby, a terminal connection unit could be moved to another position, further away from an adjacent terminal connection unit, without the need for replacing the original cable conductor interconnecting the two units. Conductors can in this way be re-utilized in future changes of the system.

Furthermore, if during modification of the system, the distance added between adjacent terminal connection units would extend beyond the surplus length of the interconnecting cable conductor, a further cable conductor of suitable length may easily be interconnected into the system via the flexible and advantageous quick-coupling connectors.

Preferably, the quick-coupling connectors of the system are arranged such that accidental inclusion and coupling into the system of elements that are not intended to be included in the system is prevented. This may be provided by designing the surrounding, non-conducting portions of the female and male connectors such that they may easily be connected and disconnected to each other, but not to elements which are foreign to the system.

Moreover, the output connector of a terminal connection unit may preferably be arranged for mounting directly onto the top of the terminal connection unit, which would entail an easy instalment of the output terminal to the system. Alternatively, the output connector may be arranged on the side of the terminal connection unit facing away from the mounting surface. As a result of the location of the output connectors, the output terminals may be adapted to be arranged in front of or next to a terminal connection unit. It is, however preferred to arrange the output terminals on top of the terminal connection unit, either directly or via an intermediate coupling and connection element.

In an alternative embodiment of the system according to the present invention, a terminal connection unit has at least two output connectors. Preferably, the output connectors are oppositely arranged, such that one output connector is aligned along a first direction along the mounting surface and another output connector is aligned along a second, substantially opposite direction, whereby the set-up of the system is simplified since no consideration has to be taken as regarding what side of the terminal connection unit to put towards the mounting surface. Thereby, at least one output connector will always be available for the connection of an output terminal.

In another alternative embodiment of the system according to the present invention, a terminal connection unit has four output connectors. Each output connector is located at a longitudinal side of the terminal connection unit. This arrangement is advantageous when the terminal connection unit has the four longitudinal sides that are equal in length, i.e. the terminal connection unit may be put along the mounting surface in four different ways. Again, the end user is prevented from making a mistake when assembling the system. It should be noted that any number of output connectors may be selected for any given application without departing from the scope of the invention as claimed in the appended claims.

By placing the output connectors next to each other, yet another embodiment of the system according to the present invention is realized. This has the advantage of enabling a plurality of output terminals to be connected to a single terminal connection unit. Thus, when a large number of output terminals is required these may be positioned next to each other, thereby providing the required amount of output terminals without the need of unseemly junction boxes.

A terminal connection unit of an embodiment of the system according to the invention may have a single distribution connector for connecting a forked cord of electrical conductors, such that the terminal connection unit may be connected to two other terminal connection units, via electrical conductors. Then, the terminal connection unit may be arranged to hold or contain the electrical conductors. Preferably, a terminal connection unit is provided with two distribution connectors, each connecting to a separate terminal connection unit via cable conductors, or to an electric cabinet.

The distribution connectors of a terminal connection unit may be arranged at the same side of the terminal connection unit. It is, however, preferred to locate the distribution connectors at opposite sides, since the current and signals in the system most probably should be distributed to locations further away from the entrance side than from an oppositely arranged exit side.

Additionally, the terminal connection unit may be provided with a snap-locking arrangement for attachment to a mounting surface or holding element. Thus, a terminal connection unit is arranged to be movable from a first location to a second location in the system. For example, the electrical conductors may be exchanged for electrical conductors of a different length, such that the terminal connection unit, and hence the output terminal, may be moved closer to an end user device that is to be connected to the current and signal distribution system according to the present invention. The snap-locking arrangement may be realized by means of protrusions or by means of squeezing the terminal connection unit between two panels. As an alternative to the snap-locking arrangement, the terminal connection unit may be provided with holes in preparation for attachment by nails or screws. Also, it may be possible to provide the terminal connection unit with an adhesive, which before use is protected by a cover tape. When the cover tape is removed, an adhesive area is exposed and the terminal connection unit may, thus, be positioned at any suitable location.

The system may also be extended by the end user, i.e. the end user may add terminal connection units to the system. For instance, by merely adding a single cord, comprising electrical conductors and connectors for connection to the distribution connectors of a terminal connection unit allows the end user to add one terminal connection unit to the system, whereby a new location for connecting an output terminal is created. The added terminal connection unit may be positioned as the last terminal connection unit in the sequence of terminal connection units and electrical conductors (as described above) or it may be inserted into the sequence of terminal connection units and electrical conductors. In this manner, the end user is able to simply and easily modify the system as found appropriate for the current situation. Since the end user is able to add terminal connection units and, hence, output terminals the need of extension cords or the alike is eliminated.

According to embodiments of the invention, the system comprises an intermediate element or adapter for interconnection between an output terminal and a terminal connection unit. The adapter comprises a female connector end and a male connector end arranged for quick-coupling engagement, in similar manner as described above. Even though the adapter can be inserted at every junction of the system, the adapter is preferably used for connection between the output connector of the terminal connection unit and the terminal connector of the output terminal, thereby providing a distance and spacing element between the output terminal and the terminal connection unit.

In one embodiment of the system, the adapter acts as an extension element enabling the positioning of an output terminal at a selected distance from the floor. For instance, the adapter could have an extension of 60 to 90 cm, thus enabling the positioning of the output terminal, i.e. wall socket, at a height that is easily accessible. Thereby, the end user does not have to bend in order to plug in an end user device to a wall socket. This is of course advantageous for a person with reduced motion ability. In some countries this is even required by law. Also, in an apartment or office adapted for disabled persons, the output terminal may be required by law to be situated at a specific height above the floor.

In the preferred embodiment, the adapter is a self-contained unit. However, in alternative embodiments, the adapter is integrated in the output terminal. Then, the thus extended output terminal has an terminal connector located at a distance from the socket, and the extended output terminal is directly connectable to a terminal connection unit in a quick-coupling arrangement.

Furthermore, two terminal connection units may be directly connected to each other, also by means of the intermediate adapter unit, without the need of electrical conductors in the form of cables, cords, etc. This feature increases the number of output connectors per unit of length in a system and where each connector has an individual number of output connectors.

Moreover, it is required by law in some countries to maintain separation of the two conductors in a single-phase power distribution system, such that it is always clear at the user end which connector pin is to make contact with which phase. In those countries, the socket plug is generally formed in an asymmetric fashion such that the end-user may not insert the plug incorrectly. Thus, it is imperative to ensure that the distribution system feeds all wall sockets in the exact same way, regarding the phase and neutral. This problem is solved according to embodiments of the invention by providing mechanically coded connectors as a complement to the above described female/male type connectors. Through said coding, there will be only one possible way to connect two connectors, that is the connectors can not be crossed in relation to each other which could cause a reversal or mix-up of the phase and neutral power signals.

According to embodiments of the invention, two different adapter versions is provided, one in which the conductor paths are straight, and one in which the conductor paths are crossed. Thereby, the terminal connection unit could be reversed 180 degrees, which is some times desirable since an output terminal can be fed with power from one of two directions, depending on how the system is assembled. Thus, the crossed-path adapter crosses the signal paths and the straight-path adapter maintains the signal paths through the adapter. In order to ensure that a correct adapter is used, the output connectors, i.e. towards the output terminal or wall socket, are mechanically coded with the code reversed 180 degrees. Thus, in order to obtain a proper orientation of the output terminal, i.e. with the holes facing away from the mounting surface, the correct adapter must be chosen. This will be elucidated in further detail below.

In an embodiment of the system according to the present invention, the system further comprises holding elements for holding the electrical conductors. The holding elements may be fitted to the mounting surface by means of nail or screws. However, the holding elements are preferably provided with an adhesive, which is covered with a protective tape, which is removed when the holding element is to be installed in a room.

The terminal connection unit may further be designed to fit in a corner of a room. This enables, for example, the application of vertical conductor holding elements along a corner of a room, for instance from floor to ceiling. An advantage with applying the system vertically is that the terminal connection units and, hence, the output terminals may be located at an arbitrary height above the floor of a room.

Optionally, the terminal connection unit may be arranged for accommodating additional electrical conductors and cables not included in the distribution system, i.e. the connectors of these additional cables are not adapted to be connected to the distribution connector or the output connector of a terminal connection unit and an output terminal, respectively. For instance, speaker cables may be fed straight through a terminal connection unit via a through hole, since such cables should preferably not be provided with connectors due to possible losses in signal strength. In this manner, a cable, having connectors which can not be connected to the connectors of the terminal connection unit, can be fed though the terminal connection unit. Alternatively, or as a complement, the distribution and the output connector of the terminal connection unit may be provided with a through hole for the same purpose as the through hole of the terminal connection unit.

In an embodiment of the system according to the present invention, the system further comprises cover strips, which are intended to improve the appearance of the system. While the system is safe, flexible and easy to install and modify, it is preferred to cover the electrical conductors and the terminal connection units with cover strips. As an alternative, the terminal connection unit may have a configuration such that it does not need to be covered with cover strips, i.e. the visible surfaces of the terminal connection unit are even and smooth. Advantageously, the number of parts in the system is decreased.

A terminal connection unit of the system according to the invention may be adapted to be mounted along the edges of a floor, wall or ceiling. Moreover, a terminal connection unit may provide output connectors for the output terminals at a conveniently accessible height. This could for instance be desirable when the system is intended for use in environments adapted to elderly persons.

The output terminals may be provided with connectors for a variety of different end user devices, such as multimedia centres, television sets, lamps, computers, computer network devices, speakers and phones. Thus, in embodiments of the system according to the present invention, the connectors may be adapted to the design of Ethernet cable connectors, power plugs, telephone points, audio signal connectors, etc.

Further features of, and advantages with, the present invention will become apparent when studying the appended claims and the following description. Those skilled in the art realize that different features of the present invention may be combined to create embodiments other than those described in the following, without departing from the scope of the present invention.

### Brief Description of the Drawings

Exemplifying embodiments of the present invention will be described in conjunction with the accompanying drawings, which is provided by way of non-limiting examples and on which:
Fig. 1 shows a room, in which an embodiment of the system according to the invention is installed;
Fig. 2a is a schematic view of a terminal connection unit, an output terminal and electrical conductors;
Fig. 2b is a further schematic view of the system according to the invention, with terminal connection units, output terminals, electrical conductors and an intermediate adapter;
Fig. 2c shows a room, in which a further embodiment of the system is illustrated;
Fig. 3 shows an embodiment of the output terminal;
Fig. 4a shows an embodiment of the terminal connection unit;
Fig. 4b shows a further embodiment of the terminal connection unit;
Fig. 5a shows an embodiment of the intermediate adapter;
Fig. 5b shows a schematically comparison of the power signal path in an ordinary and a reversed intermediate adapter;
Fig. 6a-16 show various elements for interaction with and in an electric distribution system according to embodiments of the invention.
Fig. 17 shows a top and a side view of an embodiment of a terminal connection unit;
Fig. 18 shows a side view of an output terminal according to a further embodiment according to the present invention;
Fig. 19 shows a front view of an output terminal according to Fig. 18;
Fig. 20 shows an embodiment of a terminal connection unit, which is adapted to be compatible with the output terminal according to Fig. 18;
Fig. 21 shows another embodiment of a terminal connection unit, comprised in a further embodiment of the system according to the invention;
Fig. 22 shows a top view of a first working example of a holding element,
Fig. 23 shows a side view of the holding element according to Fig. 22,
Fig. 24 shows a top view of a second working example of a holding element, and
Fig. 25 shows a side view of the holding element according to Fig. 24.

### Detailed Description of Preferred Embodiments of the Invention

Throughout this description, the same reference numerals has been used to denote similar elements when applicable.

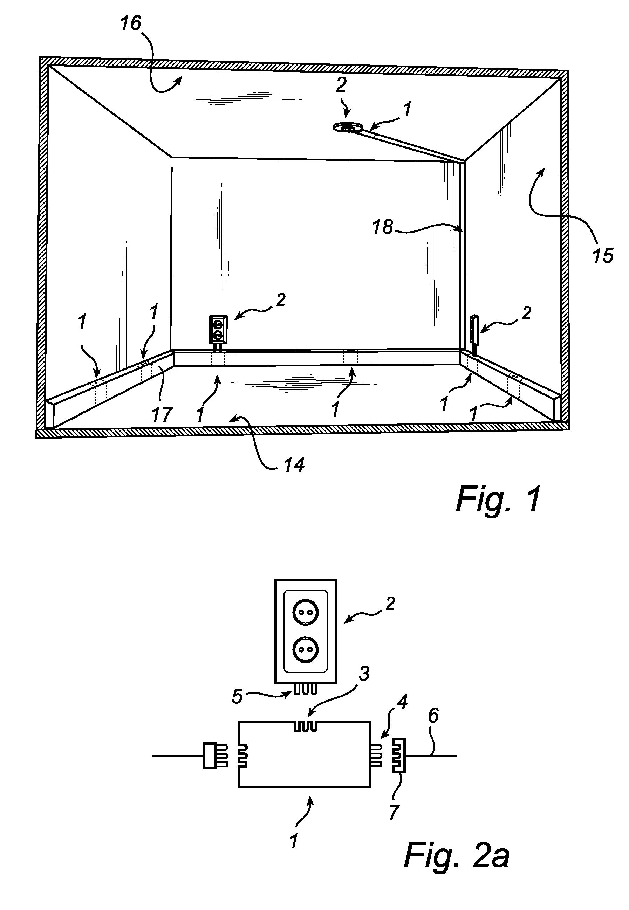

In Fig. 1, there is shown a room, in which an embodiment of the system according the invention is installed. The system, which is used for distributing electrical power and/or electrical signals, comprises terminal connection units 1, output terminals 2, electrical conductors (cords), conductor holding elements for holding the conductors and a plurality of different types of cover strips. Along the edges of the floor 14 of the room, a plurality of terminal connection units 1 are installed. The terminal connection units 1 are connected by means of electrical conductors (not shown). Output terminals 2 are connected to some of the terminal connection units 1. The output terminals 2 provide outlets for different user devices, such as lamps, television sets, computers, phones and speakers.

Further, the system comprises a vertical holding element 18 for providing terminal connection units 1 along the corner of the room. These terminal connection units 1 are easily accessed, since the end user does not need to reach down to the floor 14 to access an output terminal 2. In the example shown, the vertical holding element 18 extends to the ceiling 16, providing the possibility of further terminal connection units 1. At a terminal connection unit in the ceiling 16, an output terminal 2, which is adapted to be mounted in the ceiling 16, is installed. In the illustrated embodiment, there are a surplus of terminal connection unit in relation to output terminals. Furthermore, the terminal connection units 1 are shown at equal distances along the skirting of the room, such that an end user can put an output terminal 2 in the terminal connection unit 1 nearby a user device located almost anywhere in the room. However, since the system of the invention allows for easy modification thereof, the distances between adjacent terminal connection units in an installed system may vary, and the number of terminal connection units for a particular room size may of course also be varied between different apartments.

Fig. 2a shows parts of the system according to Fig. 1 in more detail. There is shown an output terminal 2 having two outlets for electrical power and one connecting element 5, i.e. a terminal connector, for connection to a terminal connection unit 1. The connecting element 5 of the output terminal 2 provides a quick-coupling of the output terminal 2 to a connecting element 3, i.e. an output connector, of the terminal connection unit. The terminal connection unit 1 further comprises two distribution connectors 4 for connection to other terminal connection units 1 via electrical cable conductors 6 (cords).

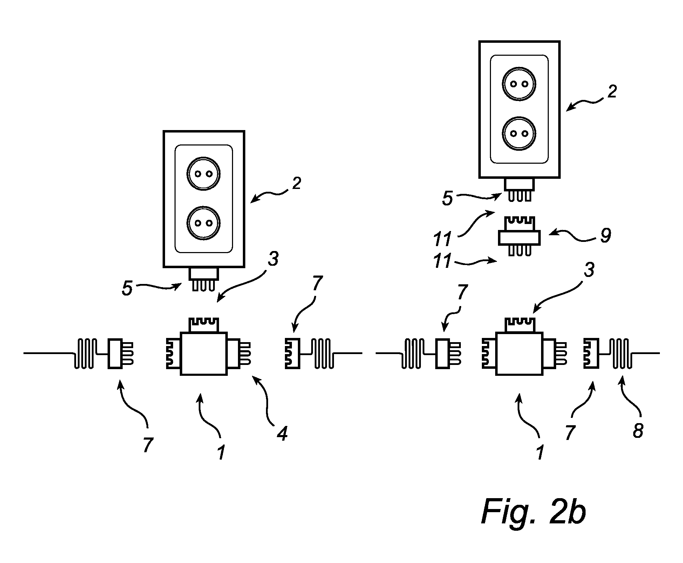

Fig. 2b is a further schematic view illustrating embodiments of the system according to the invention. There is shown two examples for connecting the output terminal 2 to a terminal connection unit 1. In the example to the left in the drawing, there are demonstrated mechanically coded interconnections between the output connector 3 and the terminal connector 5, as well as between the distribution connectors 4 and conductor connectors 7. Here, the output terminal 2 is arranged for direct coupling to the terminal connection unit 5, i.e. without an intermediate coupling unit or adapter. The mechanical coding has in this figure been schematically illustrated as the connectors comprising different outer connector pins, one square-ended and one round-ended pin. Thereby, the two interacting connectors can only be connected in one orientation, i.e. the square-ended pin of a male connector must be aligned with a square-ended receptor of a female connector. However, the mechanical coding is preferably of a different design, more complex and secure design, as will be more clearly illustrated below.

In the example to the left in the drawing, the opposing connectors 3 and 5 are aligned in a matable orientation. Thereby, they can be directly interconnected to each other. However, in the example to the right in the drawing, the output connector 3 and the terminal connector 5 does not have a matable orientation. In some instances, this can be addressed by simply reversing one of the output terminal and terminal connection unit 180 degrees. However, this is often not possible, since the orientation is locked by the presence of the mounting surface or the feeding direction of the system.

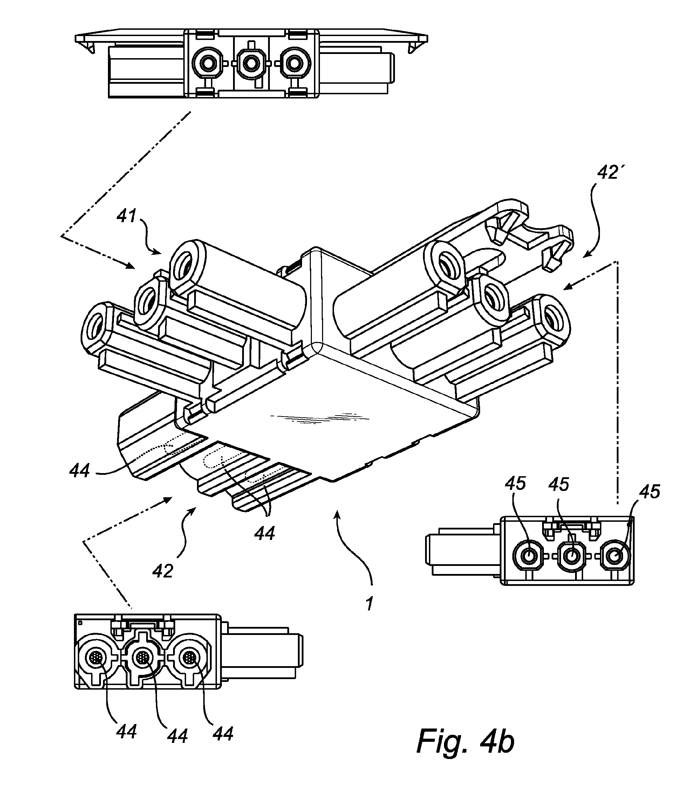

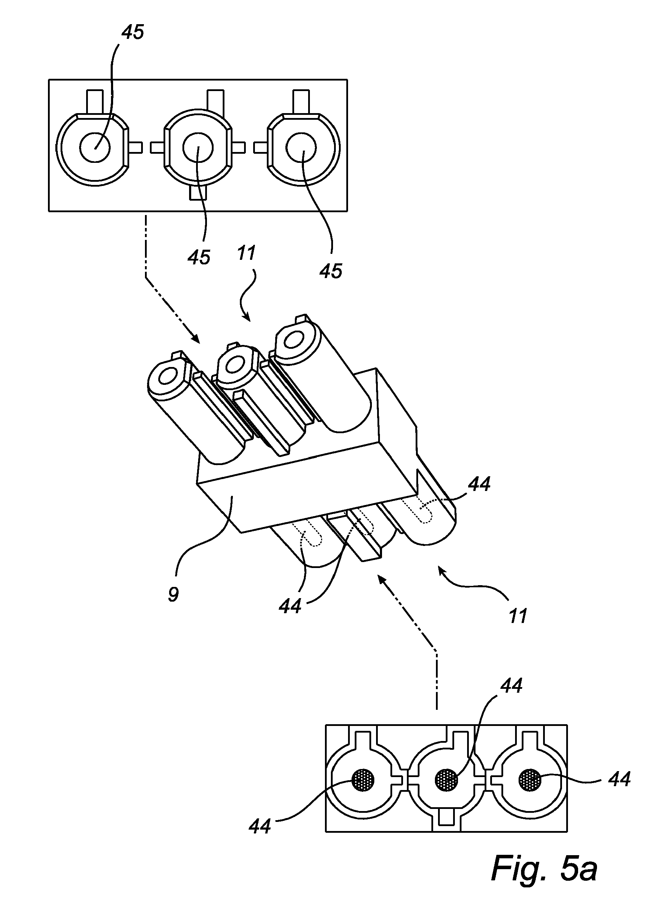

Therefore, an intermediate element is provided in which the connectors has a reversed orientation vis-à-vis each other. Such an adapter is referred to as a crossed-path adapter 9, since the conduction paths of the phase and neutral conductors are crossed. The coding in Fig. 2b is as mentioned above only schematically illustrated and is better viewed in Figs. 4b and 5a. Furthermore, Fig. 2b also schematically shows the presence of surplus cable conductor 8, which is beneficial a terminal connection unit 1 together with the output terminal 2 is to be moved further away from an adjacent terminal connection unit 1 or electric cabinet.

It should be noted that even if the connectors are mechanically coded for preventing connection of devices not belonging to the system, the mechanical coding could be neutral as far as orientation is regarded. In many countries, there is no legislative or practical reason for keeping track of which conductor that is the phase and neutral conductor, respectively. Then, the single-orientation coding serves no purpose and a dual-orientation coding is used instead, which permits a 180 degrees reversal of the connector orientation without affecting their connectability.

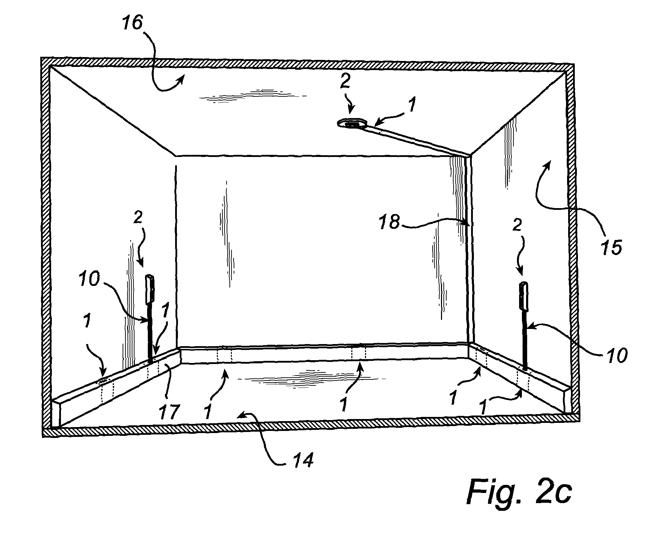

Turning to Fig. 2c, there is illustrated an embodiment of the present invention comprising elongated intermediate elements or height adapters 10. Such height adapters 10 may be used for adapting the vertical position of terminal outputs 2 without having to adjust the positions of the terminal connections units 1. Of course, the height adapters 10 may be provided in similar manner along a ceiling, a floor, on or under a table top or other worktop, for adapting the position of a terminal output without having to adapt the position of a terminal connection unit.

Furthermore, the height adapters 10 could be single-orientation or dual-orientation adapters, mainly depending on the particular country of installation. Thus, the conduction paths within the adapters could be straight or crossed, in a manner described more fully below.

Also, the height adapters 10 could be formed as stand-alone, inter-connectable elements, or formed as an integral unit with the terminal outputs 2.

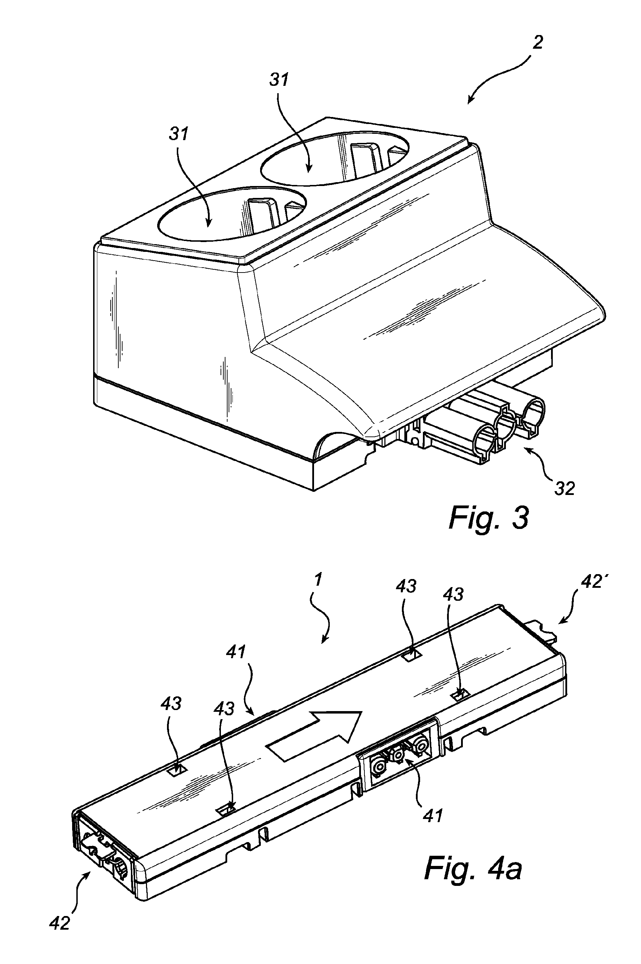

Referring to Fig. 3 through Fig. 16, there is demonstrated specific working examples of the system according to the present invention. Even though the details presented below may be manufactured of many different materials, the elements in the examples presented in Figs. 3-16 are made of a selected type of wood or plastic, for example acrylonitrile-butadienestyrene plastic (ABS-plastic), or a combination thereof.

In Fig. 3, there is shown an output terminal 2, in the form of a wall socket, comprising two power points 31, wherein each power point 31 is adapted for connection of a plug connector of a user device. The output terminal 2 further comprises a terminal connector 32 for connecting to a terminal connection unit. The terminal connection 32, in this example, is a mechanically coded male type connector.

With reference to Fig. 4a, a terminal connection unit 1 is illustrated. This particular terminal connection unit comprises two output connectors 41 for connection of output terminals, one intended to face upwards on the top surface of the unit 1, and one intended to face downwards, when the unit 1 is horizontally mounted onto a wall. The output connectors 41 are arranged at opposite ends of the unit 1, such that if the terminal connection unit is rotated 180 degrees around a longitudinal axis of the terminal connection unit 1, there will still be an output connector 41 available at the top of the terminal connection unit 1. This renders it difficult to mount the terminal connection unit 1 incorrectly. The output connectors 41 are in the shown example female type connectors.

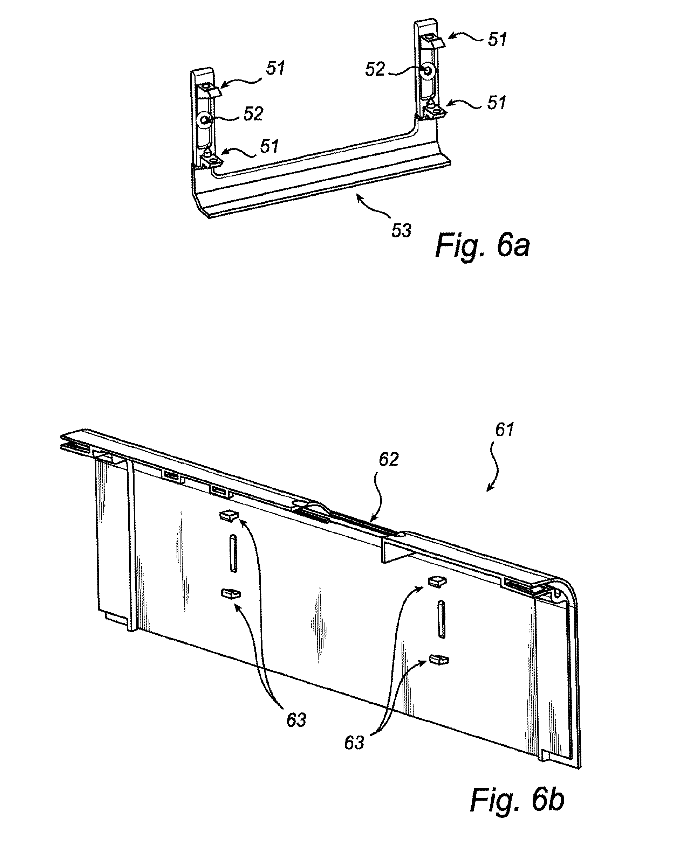

Moreover, the terminal connection unit 1 according to Fig. 4a comprises two distribution connectors 42, 42' for connecting electrical conductors to the terminal connection unit. One of the connectors is a male connector 42 and the other connector is a female connector 42', where the male connector 42 is intended for receiving the feeding current from the upstream end of the system, while the female connector 42' is intended for connection of further conductor and terminal connection units downstream in the system. Hence, if the terminal connection unit 1 is mounted in the wrong direction, the connectors will not match and the mistake will be detected and corrected. On each inwardly and outwardly (with respect to the mounting surface) facing side of the terminal connection unit four cavities (indentations) are arranged, intended for mounting the unit 1 onto the wall as shown in Fig. 6a.

Fig. 4b shows an alternative embodiment according to the invention of the terminal connection unit 1. This is a more compact embodiment and comprises two opposite distribution connectors 42, 42', but only one output connector 41, adapted to be upwardly mounted. The male type distribution connector 42 comprises male connector pins 44, to be connected to female type connectors. Oppositely arranged is a female type connector 42' comprising female connector sleeves 45, which are to be connected with male type connectors. Also in this embodiment, the connectors are mechanically coded with a single-orientation coding.

In Fig. 5a there is shown an adapter 9 according to embodiments of the invention. As mentioned above, such an intermediate adapter is used for sequentially interconnecting two terminal connection units or interconnecting the terminal output with the terminal connecting unit. In the same way as in Fig. 4b, the male and female connector are mechanically coded for permitting only single-orientation connection.

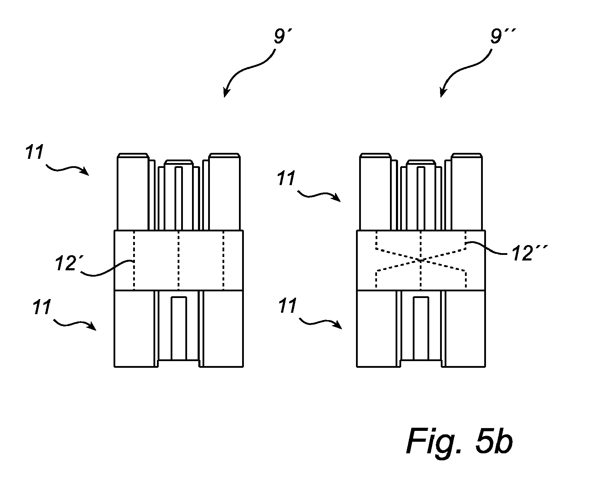

Fig. 5b demonstrates both types of adapters: a straight-path adapter 9' and a crossed-path adapter 9". Dotted lines 12', 12" represent the power signals or conduction paths of the adapters. Thus, the conduction paths of straight-path adapter 9' runs straight through the adapter. Contrarily, the conduction paths of the crossed-path adapter 9" are crossed within the adapter 9", i.e. shifting neutral and phase power signals from the left to right and vice versa. These single-orientation adapters 9', 9", the straight-path adapter 9' as well as the crossed-path adapter 9", are best used in those countries where the mutual position of the neutral/phase signal is regulated by law. The central conduction path represents the earth signal, which is to be unaffected by the orientation of the adapters.

Turning to Fig. 6a, a console (holding element) 53 is shown for attaching a terminal connection unit to the wall. The console 53 has two legs connected at opposite end of an elongated body. Each leg is provided with two protrusions 51 which, when the terminal connection unit is being mounted onto the console, is inserted into cooperating cavities of the terminal connection unit. Further, each leg has a through hole 52 for fixation of the console onto the wall by means of screws, nails or the alike.

In Fig. 6b, a cover lid 61 of a terminal connection unit is presented. On the inner surface of the cover lid there are four extensions 63, which are arranged to match corresponding cavities 43 of the terminal connection unit 1 according to Fig. 4. By means of the extensions 63, the cover lid 61 can be snapped onto the terminal connection unit 1, in a manner similar to the manner in which the terminal connection unit is mounted onto the console according to Fig. 5. In addition, the upper part of the lid 63 has an opening, which is located such as to match the location of the output connector of the terminal connection unit. The purpose of the cover lid is to make the appearance of the system more appealing, as well as to protect the terminal connection units and the cables of the system.

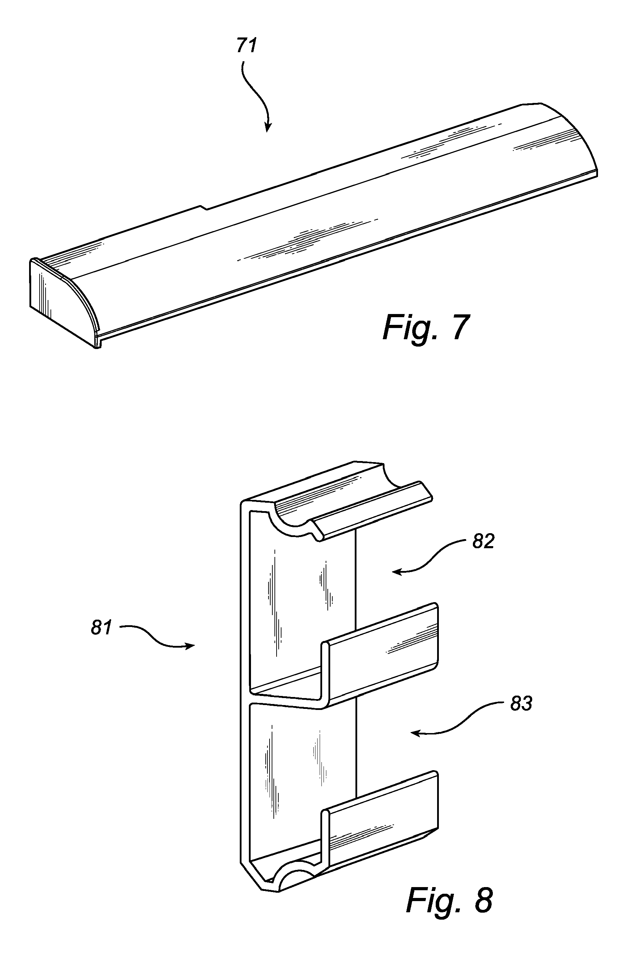

In Fig. 7, a sliding panel 71 is introduced. The sliding panel 71 is movably mounted at the upper part of the cover lid 61 according to Fig. 6. The sliding panel 71 is fitted into grooves of the cover lid. The purpose of the sliding panel is to protect the terminal connection unit from dust and other undesired matter. Also, the end user is prevented from easily accessing the electrical interior of the terminal connection unit 1 and is, hence, safely kept away. In addition, a more appealing appearance of the terminal connection unit is provided.

Further, Fig. 8 shows a conductor holding element (or console) 81 for holding the conductors or cables. The conductor holding element 81 has two sections 82, 83 in which conductors may be placed. For example, the upper section 82 may be used for power conductors and the lower section 83 may be used for computer network cables.

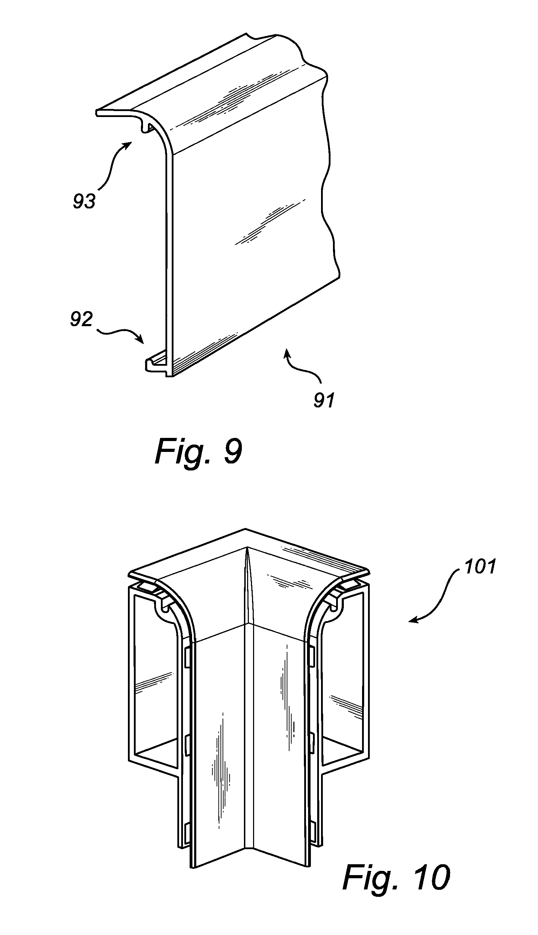

Turning to Fig. 9, there is illustrated a portion of a cover strip 91, which can be snapped onto the conductor holding element according to Fig. 8. The cover strip may, in another embodiment, be arranged to be mounted by means of nails or screws. The cover strip 91 have a configuration similar to the configuration of the cover lid. The technical functionality of the system is not dependent on the cover strip 91. Hence, the cover strip merely has an aesthetic function.

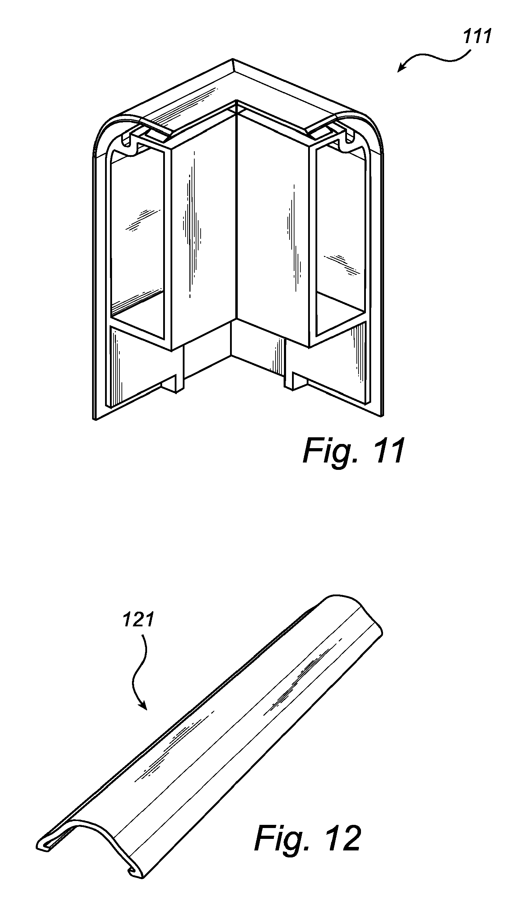

In Fig. 10 and Fig. 11, there is shown an inner 101 and an outer 111 corner element respectively. The inner corner element 101 can be fitted next to a cover strip for placement at a corner of a room, thus conforming to the corner. The outer corner 111 is used correspondingly, when the room has projecting corners.

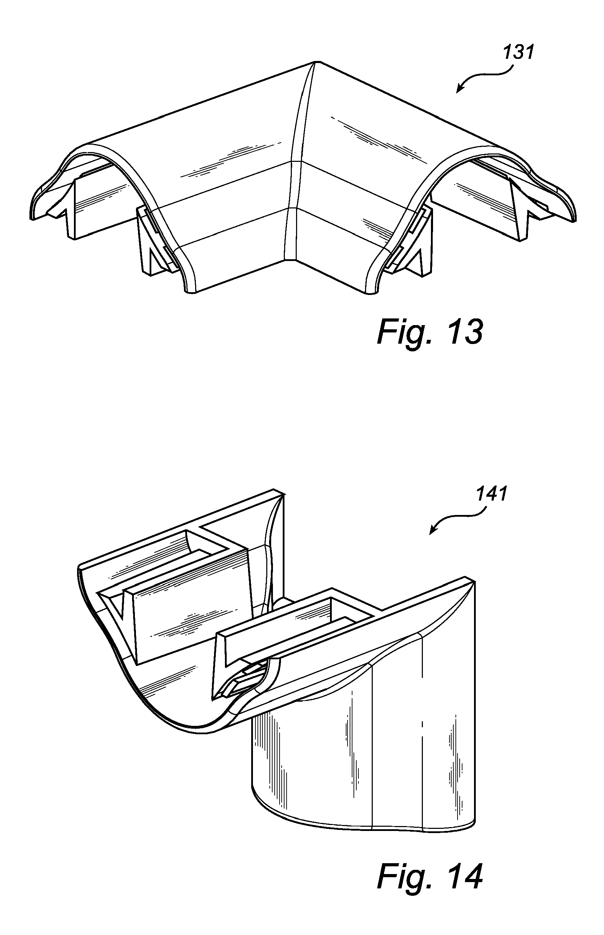

Fig. 12 shows a different type of cover strip 121, typically used at ceilings or vertically along walls. The purpose and function corresponds to that of the cover strip 91 described above.

In Figs. 13 through 15, there are illustrated additional exemplifying variants of cover strips. The variants of the cover strip according to Fig. 12 in Fig. 13 through 15 show, for instance, corner pieces 131 and ceiling passages 141, 151.

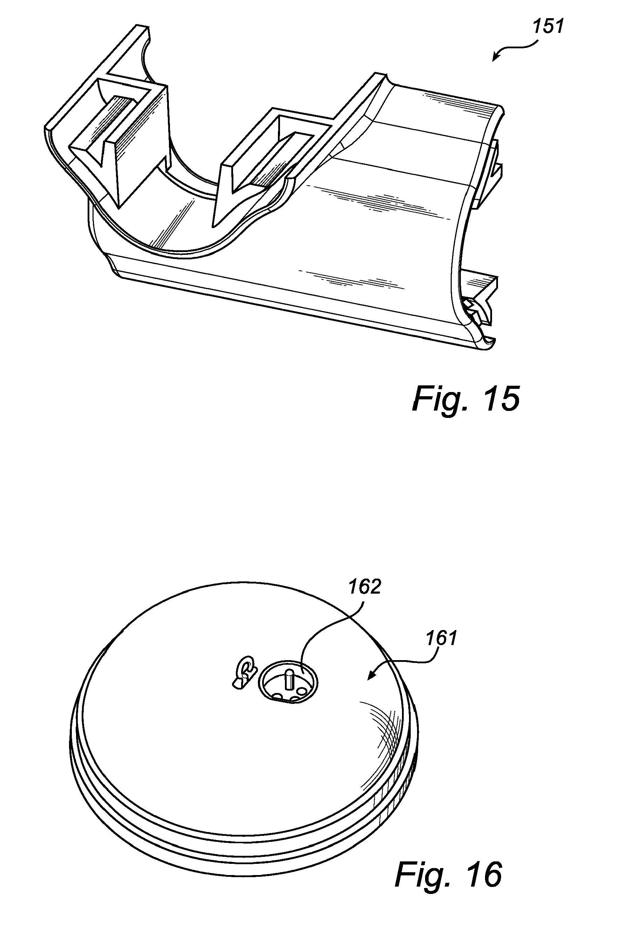

Fig. 16 shows another embodiment of a terminal output 161 to be mounted onto a ceiling surface. The terminal output 161 comprises an output connector 162 and, generally, a hook for mounting of a user device, normally a ceiling lamp. The ceiling mounted terminal output 161 is to be connected to a ceiling mounted terminal connection unit (not shown). Furthermore, the ceiling mounted terminal output 161, as well as other terminal outputs in the system, may comprise a wireless receiver for enabling wireless switch and dimmer control.

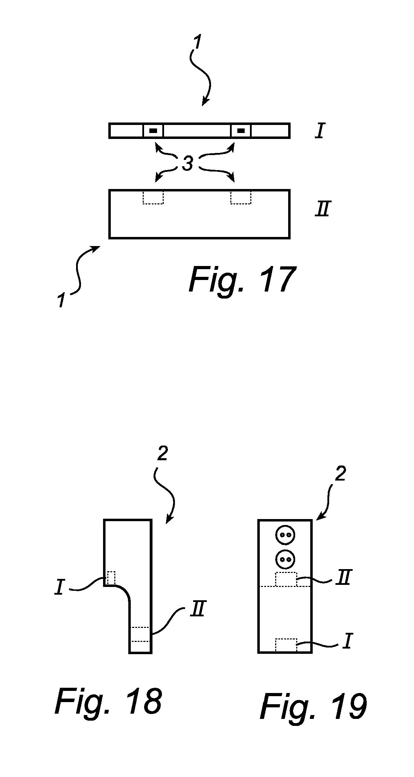

With reference to Fig. 17, there is shown a top view I and a side view II of an embodiment of the terminal connection unit 1, comprised in the system according to the invention. The terminal connection unit 1 comprises two output connectors 3, arranged at the same side, for connection to more than one output terminal 2 at the same time.

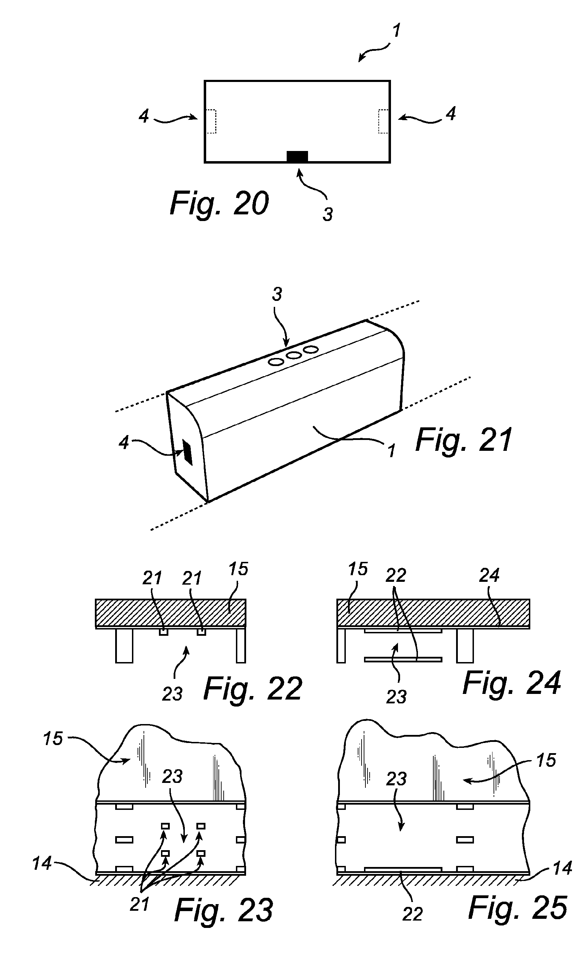

In Figs. 18 and 19, a side and a front view of a further embodiment of an output terminal 2 is demonstrated. The reference "I" denotes a first possible location of the terminal connector of the output terminal, whereas the reference "II" denotes another possible location of the terminal connector of the output terminal. As illustrated by I, the output terminal is adapted to an embodiment of a terminal connection unit as shown in Fig. 20, which is described below. The location II of the terminal connector fits with the terminal connection unit as shown in, for instance, Fig. 17.

Fig. 20 shows a further example of an embodiment of the terminal connection unit. According to Fig. 20, the output connector 3 is located at the front side (facing away from the mounting surface) of the terminal connection unit 1. As described in the previous paragraph, the terminal connection unit 1 according to Fig. 20 is adapted to be used in conjunction with the output terminal according to Fig. 18 and Fig. 19.

Further, in Fig. 21, there is shown an additional embodiment of the terminal connection unit 1, comprised in the system according to the invention. The terminal connection unit 1 shown in Fig. 21 comprises, as many other configurations of the terminal connection unit, two distribution connectors 4 and an output connector 3. The shape and form of the terminal connection unit according to Fig. 21 is even and smooth. Hence, no cover strips are needed.

In Fig. 22, a first example of the snap locking arrangement of a holding element, attached to a wall 15, is roughly depicted. Fig. 22 shows a top view of the first example of the snap locking arrangement of the holding element. The protrusions 21 are intended to snap into corresponding holes of the terminal connection unit, which is to be located at position 23.

In Fig. 23, there is a side view of the first example of the holding element. In the first example, the holding element is provided with protrusions 21, which are to be received by the terminal connection unit. Hence, the terminal connection unit is provided with corresponding indentations. In this example, the holding element is located just above the floor 14 of a room.

Further, a second example of the holding element is shown in Fig. 24, which is a top view thereof. In the second example, the holding element comprises two panels 22 forming a narrow section at the bottom of the holding element, in which section the terminal connection unit may be positioned. The width of the section is carefully matched to the width of the terminal connection unit such that it fits tightly between the panels 22. In this manner, the terminal connection unit is held securely in position 23 next to the wall 15.

In Fig. 25, there is shown a side view of the holding element according to Fig. 24. The panels 22 are in this example relatively low, whereby the major part of a side of the terminal connection unit, inserted between the two panels 22, is accessible, such that connectors may be located at the side if desired.

Even though the invention has been described with reference to specific exemplifying embodiments thereof, many different alterations, modifications and the like will become apparent for those skilled in the art. The described embodiments are therefore not intended to limit the scope of the invention, as defined by the appended claims.

## Claims

1. A system for safe distribution of electrical current or electrical signals, comprising
at least one output terminal (2) for connection to end user devices, said at least one output terminal (2) comprising a terminal connector (5),
a plurality of terminal connection units (1), each of which comprises at least one output connector (3) for connection with a terminal connector (5), and at least one distribution connector (4), and
electrical conductors (6) for interconnecting said plurality of terminal connection units (1), said electrical conductors (6) comprising conductor connectors (7) for connection to said distribution connectors (4),
wherein said terminal (5), output (3), distribution (4) and conductor (6) connectors are arranged to be connected and disconnected with each other, respectively, in a quick-coupling arrangement.

2. The system according to claim 1, wherein said terminal (5), output (3), distribution (4) and conductor (6) connectors comprise mutually engageable conducting portions and non-conducting portions, wherein the non-conducting portions enclose the conducting portions, respectively, for preventing accidental contact with said conducting portions by a user.

3. The system according to claim 1 or 2, wherein each of said terminal connection units (1) comprises at least a first and a second output connector (3), each output connector (3) being adapted for connection to a terminal connector (5) of an output terminal (2).

4. The system according to claim 3, wherein said first and second output connectors (3) are arranged at opposite sides of said terminal connection unit (1).

5. The system according to any one of the preceding claims, wherein each of said terminal connection units (1) comprises at least two distribution connectors (4).

6. The system according to claim 5, wherein said distribution connectors (4) are arranged at opposite sides of said terminal connection unit (1).

7. The system according to any one of the preceding claims, further comprising a plurality of adapter units, each adapter unit having a first connector for connection to a terminal connector of an output terminal, and a second connector for connection to an output connector of a terminal connection unit.

8. The system as claimed in claim 7, wherein the adapter units are have a longitudinally extended shape for providing a spaced interconnection between a terminal connection unit and an output terminal.

9. The system as claimed in claim 8, wherein said system comprises adapter units with a selection of longitudinal extensions for providing selected distance between a terminal connection unit and an output terminal.

10. The system as claimed in any one of claims 7-9, wherein said first and second connectors, said terminal connectors (5), said output connectors (3) and said conduction connectors 7 are mechanically coded for permitting coupling between the respective connectors in one orientation only,
wherein said plurality of adapter units include straight-path adapter units in which the conduction paths are uncrossed within the adapter unit, and crossed-path adapters in which the conductor paths are crossed within the adapter unit, and
wherein the mechanical coding of the connectors is reversed between the straight-path and the crossed path adapter units, such that the conduction path between a terminal connection unit and an output terminal interconnected via an adapter unit is either maintained or reversed.

11. The system as claimed in any one of claims 7-10, wherein said adapter unit and said output terminal is formed as an integral unit, whereby said terminal connector and said first connector are excluded from the integral unit.

12. The system according to any one of the preceding claims, further comprising a plurality of holding elements for holding said terminal connection units,
wherein said holding elements and said terminal connection units (1) are adapted to allow said terminal connection units (1) to be moved from a first holding element to a second holding element.

13. Use of the system according to any one of the preceding claims, for distribution of electrical current or electrical signals in a domestic environment.
